# EUROPEAN PATENT SPECIFICATION

(11) **EP 3 293 396 B1**
(45) Date of publication and mention of the grant of the patent: **05.05.2021**
(21) Application number: 16772526.6
(22) Date of filing: 24.03.2016
(51) Int. Cl.: F04C 29/12, F04B 39/10, F04C 18/344, F16K 1/00, F16K 3/34, F16K 15/02

(54) **VANE COMPRESSOR**
FLÜGELZELLENVERDICHTER
COMPRESSEUR À PALETTES

(30) Priority: 27.03.2015 JP 2015065797
(43) Date of publication of application: 14.03.2018
(73) Proprietor: Valeo Japan Co., Ltd., Saitama 360-0193 (JP)
(72) Inventor: KANNO, Ryuji, Kumagaya-shi Saitama 360-0193 (JP); MUTA, Shunji, Kumagaya-shi Saitama 360-0193 (JP)
(74) Representative: Tran, Chi-Hai
(86) International application number: PCT/JP2016/059318
(87) International publication number: WO 2016/158645

(56) References cited:
- EP-A2- 1 059 446
- DE-A1-102006 005 535
- JP-A- H05 288 186
- JP-A- H05 288 186
- JP-A- 2004 353 620
- JP-A- 2006 125 374
- JP-A- 2008 128 314
- JP-A- 2014 227 901
- JP-A- 2014 227 901

## Description

### Technical Field

The present invention relates to a vane compressor and, more particularly, to a vane compressor provided with a check valve having improved operability.

### Background Art

There is a known structure of a vane compressor for in-vehicle air conditioners in which a check valve is provided in the vicinity of an intake port of the compressor to prevent backflow of a refrigerant gas from a low pressure chamber of the compressor to an external refrigeration cycle. In this structure, the check valve is opened when the compressor operates and a low pressure cooling medium sucked from the external refrigeration cycle is sucked into the low pressure chamber through the intake port. In addition, when the compressor stops, the check valve is closed to prevent the backflow from the intake port to the external refrigeration cycle close to a heat exchanger for cooling because the cooling medium being compressed in a compression chamber reversely rotates a compression mechanism.

In the disclosed structure of the check valve, a guide cylinder (valve case), biasing means (spring), a valve body, and a valve seat are inserted into the intake port formed in a front head and the posture of the valve body is controlled by a valve case (see, for example, PTL 1). However, the check valve having the valve case may be deformed when the valve case is fixed to the front head. Therefore, a check valve in which the valve case is integrated with the front head has been proposed (see, for example, PTL 2, PTL 3, and PTL 4).

### Citation List

### Patent Literature

PTL 1: JP-A-5-288186
PTL 2: JP-A-9-250472
PTL 3: JP-A-2004-353620
PTL 4: JP-A-2009-203931

### Summary of Invention

### Technical Problem

However, since the valve body is supported by a guiding portion in a cantilever manner in the check valve disclosed in PTL 2, the valve body is inclined and lodges in an opening forming a gas passage, thereby interfering with the operability of the check valve. In addition, although the valve body does not lodge in the opening in the check valve disclosed in PTL 3 unlike the check valve in PTL 2, since the opening is divided into a plurality of sections, the effective passage for the refrigerant gas is narrowed and the passage resistance is apt to increase relatively. In addition, there is no technique for fully opening the check valve immediately after starting the compressor. Although the check valve disclosed in PTL 4 has eliminated the application of a push-up force to the check valve unlike the check valve in PTL 2, there is no technique for fully opening the check valve immediately after starting the compressor. Conventionally, there is no structure of a check valve in which the valve body is pushed down to the bottom surface of the guiding portion immediately after the compressor is started to fully open the check valve in the check valve in which the valve case is integrated with the front head.

An object of the invention is to provide a vane compressor having a check valve in which a valve case is integrated with a front case and the operability is improved to reduce the passage resistance of the check valve.

### Solution to Problem

A vane compressor according to the invention includes a housing having an intake port sucking a refrigerant gas from an external refrigeration cycle and a low pressure chamber communicating with the intake port and a check valve for preventing backflow of the refrigerant gas from the low pressure chamber to the external refrigeration cycle, in which the check valve includes a valve seat provided in the intake port and having an intake opening at the center thereof, a cylindrical valve body having an abutting portion abutting against the valve seat, a biasing member biasing the valve body in a direction in which the valve body abuts against the valve seat, and a guiding portion formed integrally with the housing and slidably housing the valve body, in which the guiding portion has an opening through which part of a peripheral wall is opened to the low pressure chamber, in which an opening area of the opening changes when a circumferential surface portion of the valve body slides along an inner wall of the guiding portion, and is characterized in that a ratio of a change in the opening area of the opening to a change in a separation distance between the valve seat and the valve body changes stepwise from a small value to a large value as the separation distance increases.

In the vane compressor according to the invention, when the ratio of the change in the opening area to the change in the separation distance is small, preferably, the maximum value of the opening area is smaller than an area of the intake opening formed by the valve seat. This makes a drop in the pressure of the refrigerant gas passing through the opening relatively larger than a drop (also referred to as a pressure loss) in the pressure of the refrigerant gas passing through the intake opening, thereby making the pressure acting on the upstream side of the valve body relatively larger. As a result, the check valve can be fully opened by pushing down the valve body to the bottom surface of the guiding portion immediately after the operation of the compressor is started.

In the vane compressor according to the invention, preferably, the opening includes a first opening and a second opening, the first opening being closer to the intake port than the second opening, the second opening being connected to the first opening and having a larger opening distance in a circumferential direction of the valve body than the first opening. This can stepwise change the ratio of the change in the opening area of the opening to the change in the separation distance from a small value to a large value.

In the vane compressor according to the invention, preferably, the guiding portion has a supporting portion for supporting the circumferential surface portion of the valve body so as to suppress an inclination of the valve body and the supporting portion supports a half or more of a height of the circumferential surface portion of the valve body when the abutting portion of the valve body is present in the second opening. This can further suppress the inclination of the valve body. As a result, the operability of the check valve can be further improved.

In the vane compressor according to the invention, when the abutting portion of the valve body is present in a position corresponding to the separation distance in which the ratio of the change in the opening area to the change in the separation distance is small, preferably, an angle formed by connecting one end of the opening, the central axis of the valve body, and the other end of the opening in a cross section that is orthogonal to the central axis of the valve body and in contact with the abutting portion is less than 120 degrees. This can further suppress the inclination of the valve body and further improve the operability of the check valve.

In the vane compressor according to the invention, preferably, the opening is opened in a direction parallel to a rotary shaft of a rotor. Since this reduces an inflow path from the intake port to the compression chambers, the flow resistance of the refrigerant gas can be reduced. As a result, the low-pressure refrigerant gas can smoothly flow toward the compression mechanism.

In the vane compressor according to the invention, preferably, the valve body is formed so that a border between the circumferential surface portion and the abutting portion has a round shape. This makes it difficult for the valve body to lodge in the opening, thereby further improving the operability of the check valve.

In the vane compressor according to the invention, preferably, the guiding portion has, in an end portion opposite to the intake port, an annular refrigerant circulation groove having a diameter larger than a diameter of an inner circumferential surface of the peripheral wall of the guiding portion. Since this causes the refrigerant gas having flowed to the bottom of the guiding portion to pass through the refrigerant circulation groove, the retention of the gas in the cylinder of the valve body can be reduced and the valve body can be pushed down to the bottom surface of the guiding portion.

In the vane compressor according to the invention, preferably, a third opening connected to the second opening is provided in the supporting portion. This can reduces the flow resistance of the refrigerant gas. In addition, the retention of the gas in the cylinder of the valve body can be reduced and the valve body can be pushed down to the bottom surface of the guiding portion. In addition, the state in which the valve body is pushed down can be held. In addition, the flow rate in the direction of the central axis of the valve body can be increased.

In the vane compressor according to the invention, preferably, an end portion of the third opening opposite to the second opening is inclined with respect to a direction orthogonal to the central axis of the valve body. This makes it easy for the lubrication oil or refrigerant gas to discharge from the guiding portion. This also makes it difficult for the lower end of the valve body to lodge in the end portion of the third opening and makes it easy for the valve body to move downward.

### Advantageous Effects of Invention

The invention relates to a check valve in which a valve case is integrated with a front head and can provide a vane compressor in which the operability of the check valve has been improved to reduce the passage resistance of the check valve.

### Brief Description of Drawings

[Fig. 1] Fig. 1 is a cross sectional view illustrating an example of a vane compressor according to an embodiment.
[Fig. 2] Fig. 2 is a cross sectional view illustrating an example of a check valve.
[Fig. 3] Fig. 3 is a front view illustrating an example of the check valve in the fully closed state.
[Fig. 4] Fig. 4 is a front view illustrating an example of the check valve in the fully open state.
[Fig. 5] Fig. 5 illustrates an example of a cross section of a guiding portion, Fig. 5A is a cross sectional view taken along line A-A in Fig. 4, Fig. 5B is a cross sectional view taken along line B-B in Fig. 4, Fig. 5C is a cross sectional view taken along line C-C in Fig. 4, Fig. 5D is a cross sectional view taken along line D-D in Fig. 4, and Fig. 5E is a cross sectional view taken along line E-E in Fig. 4.
[Fig. 6] Fig. 6 is a conceptual view illustrating a stepwise change in a ratio of a change in an opening area of an opening to a change in a separation distance.
[Fig. 7] Fig. 7 is a front view illustrating a check valve in comparative example 1.
[Fig. 8] Fig. 8 is a graph illustrating the relationship between the separation distance and the opening area.

### Description of Embodiments

An aspect of the invention will be described below with reference to the attached drawings. The embodiment described below is an example of the invention and the invention is not limited to the following embodiment. It should be noted that components having the same reference numeral in this specification or drawings are identical. Various modifications may be made as long as the effects of the invention are obtained.

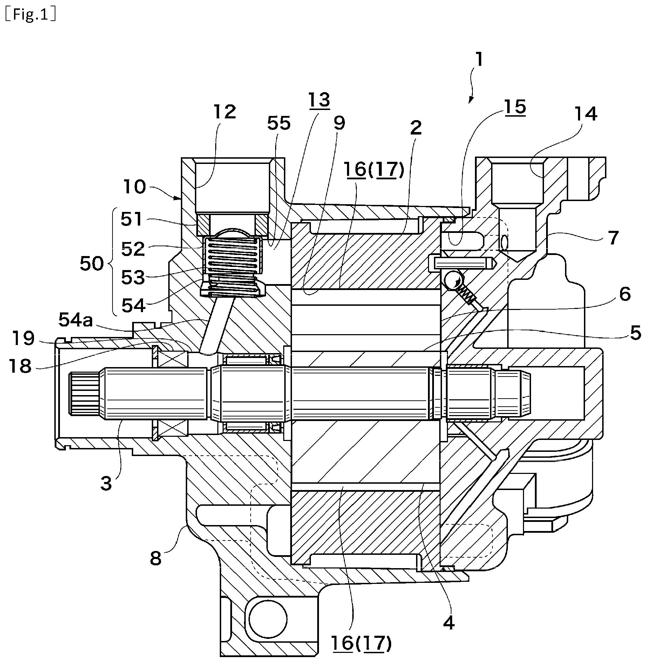

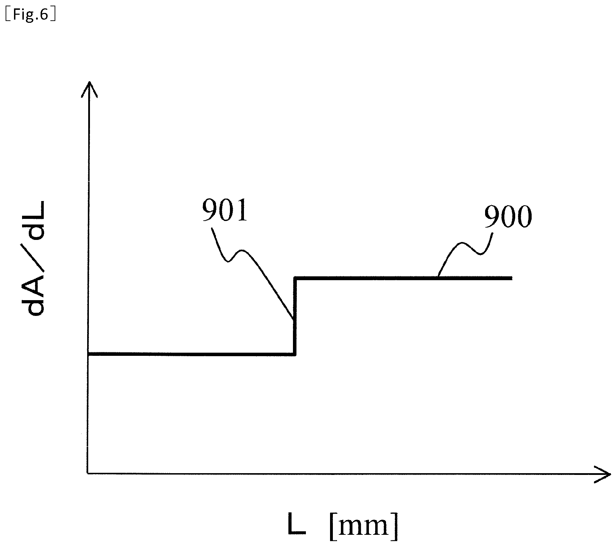

As illustrated in Fig. 1, a vane compressor 1 according to the embodiment includes a housing 10 having an intake port 12 sucking a refrigerant gas from an external refrigeration cycle (not illustrated) and a low pressure chamber 13 communicating with the intake port 12 and a check valve 50 for preventing backflow of the refrigerant gas from the low pressure chamber 13 to the external refrigeration cycle, in which the check valve 50 includes a valve seat 51 provided in the intake port 12 and having an intake opening 51a at the center thereof, a cylindrical valve body 52 having an abutting portion 521b abutting against the valve seat 51, a biasing member 53 biasing the valve body 52 in a direction in which the valve body 52 abuts against the valve seat, and a guiding portion 54 formed integrally with the housing 10 and slidably housing the valve body 52, in which the guiding portion 54 has an opening 55 through which part of a peripheral wall is opened to the low pressure chamber 13, in which an opening area A of the opening 55 changes when a circumferential surface portion 522 of the valve body slides along an inner wall of the guiding portion 54, and in which, as illustrated in Fig. 6, a ratio of a change in the opening area A of the opening 55 to a change in a separation distance L between the valve seat 51 and the valve body 52 changes stepwise from a small value to a large value as the separation distance L increases.

The vane compressor 1 is a part of a refrigeration cycle (not illustrated) and compresses the refrigerant gas vaporized by a heat exchanger (not illustrated) for cooling and sends the high pressure and high temperature gas to a condenser (not illustrated). The vane compressor 1 will be described simply with reference to Fig. 1. In the invention, the basic structure of the vane compressor 1 other than the check valve 50 is not particularly specified.

The housing 10 includes a rear head 7 fixed to the end surface on the rear side of a cam ring 2 and a front head 8 surrounding the end surface on the front side and the outer circumferential surface of the cam ring 2 and fitted to the rear head 7.

The intake port 12 is a substantially cylindrical opening formed integrally with the front head 8 and sucks the refrigerant gas vaporized by the heat exchanger (not illustrated) for cooling. The low pressure chamber 13 is a space formed in the front head 8 and communicates with the intake port 12. In addition, the rear head 7 is provided with a discharge port 14 for discharging the refrigerant gas and a high pressure chamber 15 communicating with the discharge port 14.

In the housing 10, for example, the cam ring 2 and a rotor 4 rotatably housed in the cam ring 2 and fixed to a rotary shaft 3 are disposed. The rotor 4 is provided with a plurality of vane grooves 5 and vanes 6 are inserted into the vane grooves 5. An elliptic space 9 is formed by the inner circumferential surface of the cam ring 2 and the rotor 4 formed in a perfect circle is disposed in the space 9 to form a compression space 16 between the inner circumferential surface of the cam ring 2 and the outer circumferential surface of the rotor 4. The compression space 16 is partitioned by the vanes 6 to form a plurality of compression chambers 17. The volumes of the compression chambers 17 are changed by rotation of the rotor 4.

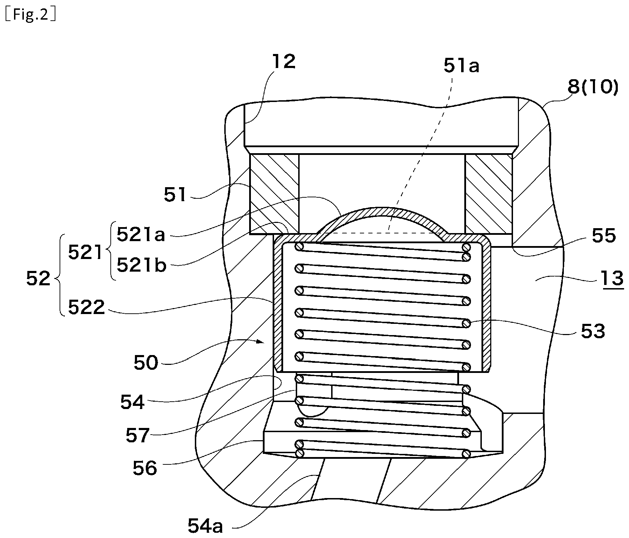

As illustrated in Fig. 1, the check valve 50 is disposed in the border portion between the intake port 12 and the low pressure chamber 13. Next, the check valve 50 will be described with reference to Figs. 2 to 6.

As illustrated in Fig. 2, the check valve 50 includes the valve seat 51, the valve body 52, the biasing member 53, and the guiding portion 54.

The valve seat 51 is an annular member having the intake opening 51a at the center thereof and fixed by being press-fitted into the intake port 12.

The valve body 52 is a cylindrical member having a closed portion 521 and the circumferential surface portion 522 extending vertically downward from the circumferential edge of the closed portion 521. The closed portion 521 has a projecting portion 521a formed by projecting the center of the closed portion 521 like a hill and the flat abutting portion 521b provided around the rim of the projecting portion 521a. In the vane compressor according to the embodiment, the border between the circumferential surface portion 522 and the abutting portion 521b of the valve body is preferably formed in a round shape. This makes it difficult for the valve body 52 to lodge in the opening 55, thereby further improving the operability of the check valve 50. Although the range of the round shape is not particularly limited, it is preferably, for example, R1 mm to R2 mm.

The biasing member 53 is, for example, a coil spring and inserted into the cylinder of the valve body 52.

The guiding portion 54 is formed integrally with the interior of the front head 8. The inner space of the guiding portion 54 houses the valve body 52 slidably. The bottom surface of the guiding portion 54 may be provided with a hole 54a communicating with a shaft seal chamber 19.

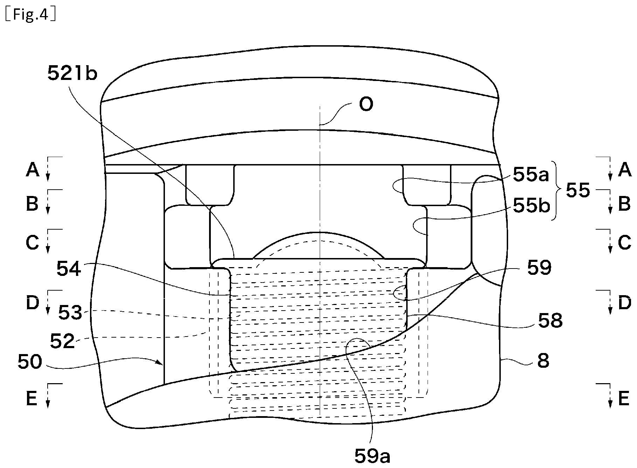

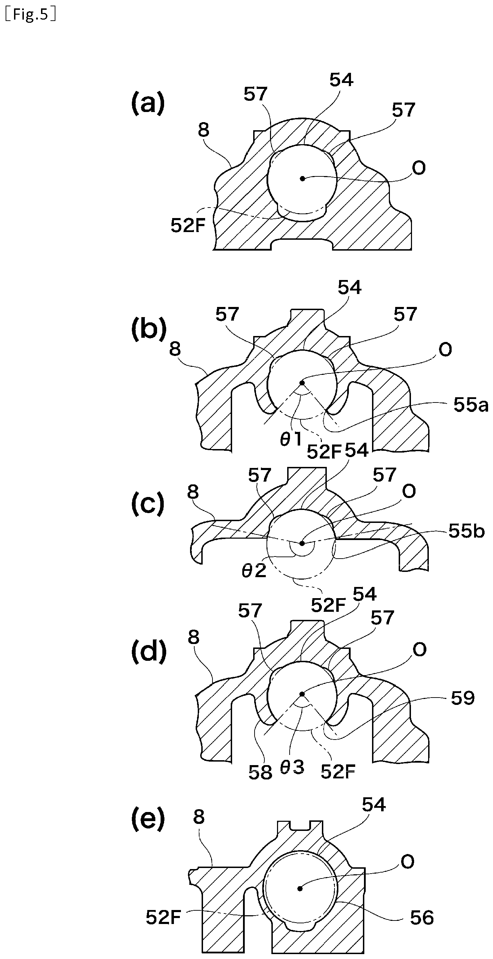

In the vane compressor according to the embodiment, as illustrated in Fig. 2, the guiding portion 54 preferably has an annular refrigerant circulation groove 56 having a diameter larger than the diameter of the inner circumferential surface of the peripheral wall of the guiding portion 54 in the end portion opposite to the intake port 12. Fig. 5 illustrates an example of a cross section of the guiding portion, Fig. 5A is a cross sectional view taken along line A-A in Fig. 4, Fig. 5B is a cross sectional view taken along line B-B in Fig. 4, Fig. 5C is a cross sectional view taken along line C-C in Fig. 4, Fig. 5D is a cross sectional view taken along line D-D in Fig. 4, and Fig. 5E is a cross sectional view taken along line E-E in Fig. 4. Fig. 5 illustrates a virtual outer circumferential surface shape 52F when the valve body is present on the cross section using a dot-dot-dash line. By providing the refrigerant circulation groove 56, a space is formed between the inner circumferential surface of the guiding portion 54 and the outer circumferential surface shape 52F of the valve body. Therefore, the refrigerant gas having flowed to the bottom of the guiding portion 54 flows to the low pressure chamber 13 through the refrigerant circulation groove 56. As a result, since the retention of the gas in the cylinder of the valve body 52 is reduced, the valve body 52 can be pushed down to the bottom surface of the guiding portion 54 and this state in which the valve body 52 has been pushed down can be held.

Preferably, the guiding portion 54 further has a vertical groove 57 that crosses the refrigerant circulation groove 56 and causes the refrigerant circulation groove 56 to communicate with the intake port 12 as illustrated in Fig. 2. The number of vertical grooves 57 is not particularly limited and may be one or more than one. Figs. 5A to 5D illustrate the mode in which the number of vertical grooves 57 is two as an example. When the guiding portion 54 has the vertical grooves 57 in addition to the refrigerant circulation groove 56, a flow path sequentially passing through the vertical groove 57, the refrigerant circulation groove 56, and the low pressure chamber 13 is formed and the flow rate of the refrigerant gas can be increased.

As illustrated in Fig. 2, the opening 55 is a hole formed in the peripheral wall facing the low pressure chamber 13 among the peripheral walls of the guiding portion 54. The intake port 12 communicates with the low pressure chamber 13 through the opening 55. In the vane compressor 1 according to the embodiment, as illustrated in Fig. 1, the opening 55 is preferably opened in the direction parallel to the rotary shaft 3 of the rotor 4. Since this reduces the inflow path of the refrigerant gas from the intake port 12 to the compression chambers 17, the flow resistance of the refrigerant gas can be reduced. As a result, the refrigerant gas can smoothly flow toward the compression mechanism.

In addition, preferably, only one opening 55 is present in the circumferential direction of the valve body 52. That is, preferably, the opening 55 is not partitioned by a peripheral wall. When only one opening 55 is present in the circumferential direction of the valve body 52, the refrigerant gas can flow through one opening 55 in a concentrated manner without being divided, thereby smoothly supplying the refrigerant gas toward the compression mechanism. Accordingly, as compared with the case in which a plurality of openings 55 is present in the circumferential direction of the valve body 52, the allowable drop in the pressure can be allocated only to the drop in the pressure at the opening. As a result, the valve body 52 can be immediately pushed down toward the bottom surface of the guiding portion 54 to fully open the check valve 50. In this specification, the circumferential direction of the valve body 52 represents the circumferential direction of the circumferential surface portion 522 of the valve body.

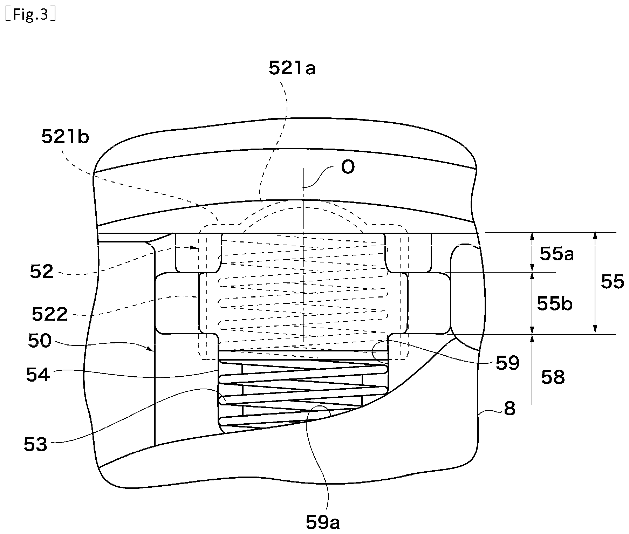

As illustrated in Fig. 3, more preferably, the opening 55 is opened in the direction parallel to the rotary shaft 3 of the rotor 4 and only one opening 55 is formed in the circumferential direction of the valve body 52.

The opening area A (mm²) of the opening 55 changes when the circumferential surface portion 522 of the valve body slides along the inner wall of the guiding portion 54. When the abutting portion 521b of the valve body abuts against the valve seat 51 as illustrated in Fig. 3, the intake opening 51a of the valve seat 51 is closed by the abutting portion 521b of the valve body, the entire opening 55 is closed by the valve body 52, and the opening area A is zero. When the valve body 52 is lifted so as to move away from the valve seat 51, the intake opening 51a is opened from the closed state, part of the opening 55 is opened, and the opening area A is increased as the separation distance L (mm) between the valve seat 51 and the valve body 52 is increased. When the valve body 52 reaches the bottom surface of the guiding portion 54 as illustrated in Fig. 4, the entire opening 55 is opened and the opening area A becomes the maximum. In this specification, the opening area A represents the opened part of the opening 55 of the area of a virtual surface obtained by virtually extending the inner wall surface of the guiding portion 54 into the opening 55. When the inner wall surface of the guiding portion 54 is formed in a cylinder, the virtual surface is the circumferential surface of the cylinder.

Fig. 6 is a conceptual view illustrating a stepwise change in the ratio of the change in the opening area of the opening to the change in the separation distance. As the separation distance L between the valve seat 51 and the valve body 52 increases, the ratio (also referred to below as dA/dL) of the change in the opening area A of the opening 55 to the change in the separation distance L is changed stepwise from a small value to a large value. As illustrated in Fig. 6, when dA/dL changes stepwise, a step 901 is present in a graph 900 having the X-axis indicating the separation distance L and the Y-axis indicating dA/dL. As illustrated in Fig. 6, dA/dL before the step is smaller than dA/dL after the step. The invention is not limited by the shape of the graph 900 or the degree of the step 901.

In the vane compressor according to the embodiment, when the ratio of the change in the opening area A to the change in the separation distance L is small, preferably, the maximum value of the opening area A is smaller than the area of the intake opening 51a formed by the valve seat 51. This makes a drop in the pressure of the refrigerant gas passing through the opening 55 relatively larger than a drop in the pressure of the refrigerant gas passing through the intake opening 51a, thereby increasing the pressure acting on the upstream side of the valve body. As a result, the check valve 50 can be fully opened by pushing down the valve body 52 to the bottom surface of the guiding portion 54 immediately after the operation of the compressor is started.

In the vane compressor according to the embodiment, preferably, as illustrated in Fig. 3, the opening 55 includes a first opening 55a and a second opening 55b, the first opening 55a being closer to the intake port 12 than the second opening 55b (illustrated in Fig. 2), the second opening 55b being connected to the first opening 55a and having a larger opening distance in the circumferential direction of the valve body 52 than the first opening 55a. This can stepwise change the ratio of the change in the opening area A to the change in the separation distance L from a small value to a large value.

When the compressor is started and the cooling medium is sucked from the intake port 12, the valve body 52 is lifted so as to move away from the valve seat 51. Immediately after lifting is started, the abutting portion 521b of the valve body is present in the first opening 55a and the ratio of the change in the opening area A to the change in the separation distance L is relatively small. Accordingly, even when the separation distance L of the valve body 52 is increased as the flow rate of cooling medium is increased, the opening area A is slowly increased and the pressure of the upstream side of the valve body 52 is increased. As a result, the increased pressure of the upstream side of the valve body 52 quickly pushes down the valve body 52 to the bottom surface of the guiding portion 54 and helps the check valve 50 to be fully opened. In addition, to reduce the passage resistance of the check valve 50, a sufficient opening area needs to be obtained when the check valve 50 is fully open. For example, the opening area of the opening 55 when the check valve 50 is fully opened is preferably larger than the area of the intake opening 51a formed by the valve seat 51. However, when it is assumed that the opening distance of the second opening 55b is reduced to the opening distance of the first opening 55a in Fig. 3, if the length (length of the valve body 52 in the direction of a central axis O) of the opening 55 is not increased, the passage resistance of the check valve 50 cannot be reduced sufficiently because the opening area when the check valve 50 is fully opened is relatively small. When the length of the opening 55 is increased, the stroke length of the valve body 52 is increased and the valve body 52 does not easily reach the bottom surface of the guiding portion 54. In addition, the check valve 50 may not be housed in the housing 10 of the compressor. Accordingly, in the embodiment, the opening 55 has the second opening 55b having an opening distance in the circumferential direction of the valve body 52 larger than in the first opening 55a, so a sufficient opening area can be obtained without increasing the length of the opening 55 when the check valve 50 is fully opened. Accordingly, the valve body 52 can easily reach the bottom surface of the guiding portion 54 and a sufficient opening area can be obtained, thereby enabling reduction of a drop in the pressure in the opening. In addition, since the guiding portion 54 has the first opening 55a, the inclination of the valve body 52 immediately after the valve body 52 moves away from the valve seat 51 can be suppressed. Since the guiding portion 54 has a supporting portion 58, the inclination of the valve body 52 when the abutting portion 521b of the valve body is present in the second opening 55b can be further suppressed. As a result, the operability of the check valve 50 can be further improved.

In the vane compressor according to the embodiment, preferably, the guiding portion 54 has the supporting portion 58 for supporting the circumferential surface portion 522 of the valve body 52 so as to suppress the inclination of the valve body 52 and the supporting portion 58 supports the half or more of the height of the circumferential surface portion 522 of the valve body when the abutting portion 521b of the valve body is present in the second opening 55b. This can further suppress the inclination of the valve body. As a result, the operability of the check valve can be further improved.

Preferably, as illustrated in Fig. 3, the first opening 55a has a shape in which the length in the circumferential direction of the valve body 52 is constant in the direction of the central axis O of the valve body 52. The valve body 52 moves upward and downward in the guiding portion 54 while the inclination is suppressed by the inner wall of the guiding portion 54 to which the first opening 55a is opened. At this time, a clearance is present between the valve body 52 and the inner wall surface of the guiding portion 54, and the valve body 52 is inclined within the range of the clearance and a part of the circumferential surface portion 522 of the valve body may make contact with an edge of the first opening 55a. If the length in the circumferential direction of the first opening 55a is not constant and, for example, increases toward the second opening 55b, when the valve body 52 is inclined within the range of the clearance, the contact part of the circumferential surface portion 522 of the valve body in contact with the edge of the first opening 55a is changed as the valve body 52 moves upward and downward. Then, the sliding resistance of the circumferential surface portion 522 of the valve body with respect to the edge of the first opening 55a is increased, possibly preventing the valve body 52 from moving up and down. In contrast, when the length in the circumferential direction of the first opening 55a is constant, even if the valve body 52 is inclined within the range of the clearance, the contact part of the circumferential surface portion 522 of the valve body in contact with the edge of the first opening 55a is not changed as the valve body 52 moves upward and downward. As a result, even when the circumferential surface portion 522 of the valve body rubs against the edge of the first opening 55a, the sliding resistance is not easily received and the valve body 52 can move smoothly.

In the vane compressor according to the embodiment, when the abutting portion 521b of the valve body is present in the position corresponding to the separation distance L in which the ratio of the change in the opening area A to the change in the separation distance L is small (when the abutting portion 521b of the valve body is present in the first opening 55a in Fig. 4), preferably, as illustrated in Fig. 5B, an angle θ1 formed by connecting one end of the opening 55a, the central axis O of the valve body, and the other end of the opening 55a in a virtual plane that is orthogonal to the central axis O of the valve body 52 and in contact with the abutting portion 521b is less than 120 degrees. In this case, even if the valve body 52 is inclined in the guiding portion 54 when the abutting portion 521b of the valve body is present in the first opening 55a, the part of the valve body close to the abutting portion 521b is prevented from being inclined beyond the edge of the opening 55a. The angle θ1 is the angle close to the opening 55a of the angles formed by both ends of the opening 55a and the central axis O of the valve body. The angle θ1 is more preferably 90 degrees or less. Immediately after the valve body 52 (illustrated in Fig. 2) moves away from the valve seat 51 (illustrated in Fig. 2), the part of the length of the circumferential surface portion 522 of the valve body supported by the supporting portion 58 is less than the half of the height of the circumferential surface portion 522 of the valve body, the valve body 52 is easily inclined, and the valve body 52 easily lodges in the opening 55a. However, the inclination of the valve body 52 can be further suppressed and the operability of the check valve can be further improved by causing the angle θ1 to fall within the above range. The lower limit of the angle θ1 is preferably 45 degrees or more, more preferably 60 degrees or more.

When the abutting portion 521b of the valve body falls within the range of the separation distance L in which the ratio of the change in the opening area A to the change in the separation distance L is large (when the abutting portion 521b of the valve body is present in the first opening 55b in Fig. 4), as illustrated in Fig. 5C, an angle θ2 obtained by connecting one end of the opening 55b, the central axis O of the valve body, and the other end of the opening 55b in a cross section that is orthogonal to the central axis O of the valve body 52 and in contact with the abutting portion 521b is preferably between 120 degrees and 300 degrees inclusive, more preferably between 150 degrees and 240 degrees inclusive. The angle θ2 is the angle close to the opening 55b of the angles formed by both ends of the opening 55b and the central axis O of the valve body. The suction efficiency of the refrigerant gas can be improved by causing the angle θ2 to fall within the above range.

In the vane compressor according to the embodiment, as illustrated in Figs. 3 and 4, the supporting portion 58 is preferably provided with a third opening 59 connected to the second opening 55b. As is apparent from Figs. 1 and 3, when the abutting portion 521b of the valve body is present in the first opening 55a, the internal space of the guiding portion 54 communicates with the low pressure chamber 13 via the third opening 59. Accordingly, when the valve body 52 moves downward, the valve body 52 can be pushed down to the bottom surface of the guiding portion 54 by immediately escaping the refrigerant gas below the valve body 52 to the low pressure chamber 13 to reduce the retention of the gas in the cylinder of the valve body 52. In addition, the state in which the valve body 52 is pushed down can be held. In addition, the flow rate of the refrigerant gas in the direction of the central axis of the valve body 52 can be increased.

In the embodiment, as illustrated in Fig. 5D, an angle θ3 obtained by connecting one end of the third opening 59, the central axis O of the valve body, and the other end of the third opening 59a in a cross section orthogonal to the central axis O of the valve body 52 is preferably between 45 degrees and 120 degrees inclusive, more preferably between 60 degrees and 100 degrees inclusive. The angle θ3 is the angle close to the third opening 59 of the angles formed by both ends of the third opening 59 and the central axis O of the valve body. The effects of the supporting portion 58 can be balanced with the effects of the third opening 59 by causing the angle θ3 to fall within the above range.

In the vane compressor according to the embodiment, as illustrated in Figs. 3 and 4, an end portion 59a of the third opening 59 opposite to the second opening 55b is preferably inclined with respect to a direction orthogonal to the central axis O of the valve body 52. This makes it easy for the lubrication oil or refrigerant gas to discharge from the guiding portion 54. In addition, this also makes it difficult for the lower end of the valve body 52 to lodge in the end portion 59a of the third opening and makes it easy for the valve body 52 to move downward.

The operation of the check valve 50 will be described with reference to Fig. 1. When the compressor starts and the refrigerant gas is sucked to the intake port 12 through the exit of the heat exchanger (not illustrated) for cooling, the valve body 52 is lifted so as to move away from the valve seat 51 and the refrigerant gas flows to the low pressure chamber 13 from the intake port 12. At this time, since the area of the opening 55 is reduced in the region in which the separation distance is small, reduction in the pressure of the refrigerant gas passing through the opening 55 becomes large, and the difference in the pressure acting on the valve body 52 can be increased instantaneously. As a result, the valve body 52 is immediately pushed down to the bottom of the guiding portion 54 and the check valve 50 can be fully opened. In addition, when the amount of refrigerant gas flowing to the intake port 12 is reduced, the valve body 52 is pushed against the valve seat 51 by a biasing force of the biasing means, and the backflow of the refrigerant gas from the low pressure chamber 13 to the intake port 12 is prevented.

### Examples

Although the invention will be further described in detail based on examples, the invention is not limited to the examples.

### (Examples 1 and 2)

The operability of the check valve illustrated in Figs. 2 to 5 was evaluated. The check valve 50 (the spring 53, the valve body 52, and the valve seat 51) was mounted to the housing 10 of the compressor. To check the effects of the clearance between the valve body and the guiding portion, a large-clearance product (example 1) in which the clearance between the valve body and the guiding portion is 0.45 mm and a small-clearance product (example 2) in which the clearance between the valve body and the guiding portion is 0.25 mm were prepared. Other components were not assembled to visually check the operation of the check valve. The operability was evaluated as described below. That is, an air pressure supply source (0.3 MPa to 0.6 MPa) was mounted to the intake port 12 of the housing 10 via a ball valve. An air pressure is supplied to the upstream of the check valve by opening and closing the ball valve repeatedly on an intermittent basis (interval of about one second) and the operability of the valve body of the check valve was visually checked.

### (Comparative example 1)

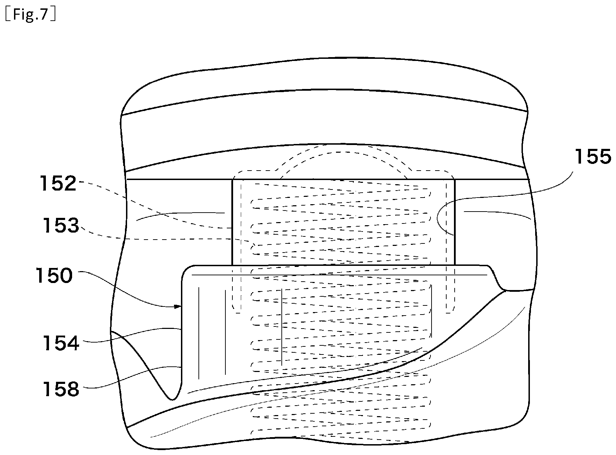

The operability of the check valve illustrated in Fig. 7 was evaluated in the same method as in example 1. A valve seat (not illustrated), a valve body 152, and biasing means 153 of a check valve 150 illustrated in Fig. 7 are the same as those of the check valve 50 illustrated in Fig. 2. The check valve 150 illustrated in Fig. 7 is the same as the check valve 50 illustrated in Fig. 2 except the shape of a guiding portion 154 and the shape of an opening 155 provided in the guiding portion 154. That is, although the supporting portion 58 has the third opening 59 in the check valve 50 illustrated in Fig. 2, a supporting portion 158 surrounds the entire circumference in the circumferential direction of the valve body 152 in the check valve 50 illustrated in Fig. 7 and does not have the opening. Although the check valve 50 illustrated in Fig. 2 has the first opening 55a and the second opening 55b having different lengths in the circumferential direction of the valve body 52, the length in the circumferential direction of the valve body 152 is constant across the entire length in the direction of the central axis O of the valve body 152 in the check valve 150 illustrated in Fig. 7.

### (Evaluation results)

The large-clearance product (example 1) and small-clearance product (example 2) did not lodge in the opening in the open and close operation checking test performed 20 times. In addition, the valve body was instantaneously lowered to the bottom surface of the guiding portion and the check valve could be fully opened. In contrast, in the check valve in comparative example 1, the valve body lodged at a midpoint of the opening 16 times in the open and close operation checking test performed 20 times. In addition, the speed at which the valve body was lowered to the bottom surface of the guiding portion was often smaller than in example 1.

The relationship between the separation distance and the ratio of the change in the opening area of the opening to the change in the separation distance was investigated for example 1, example 2, and comparative example 1. In example 1 and example 2, as illustrated in Fig. 6, the ratio of the change in the opening area of the opening to the change in the separation distance was stepwisely changed from a small value to a large value. In contrast, in comparative example 1, the ratio of the change in the opening area of the opening to the change in the separation distance was constant (not illustrated).

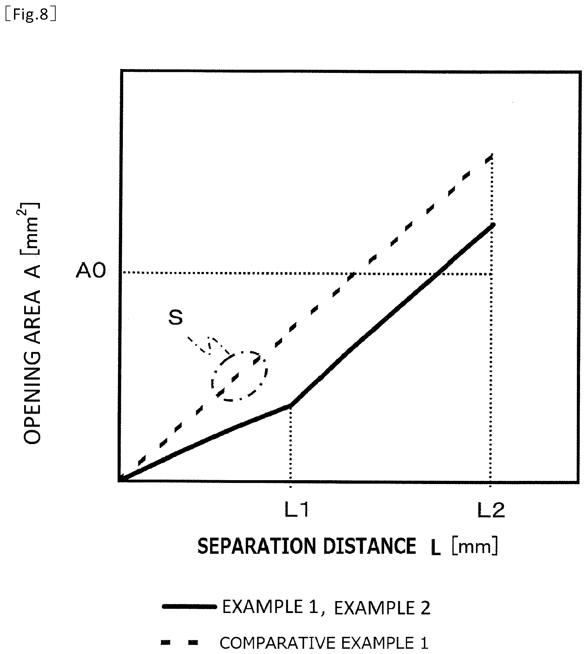

The relationship between the separation distance and the opening area was investigated for example 1, example 2, and comparative example 1. Fig. 8 is a graph illustrating the relationship between the separation distance and the opening area. In example 1 and example 2 in Fig. 8, the abutting surface of the valve body is present in the first opening before a separation distance L1 and the abutting surface of the valve body is present in the second opening in the part after the separation distance L1. In Fig. 8, a separation distance L2 represents the separation distance when the check valve in example 1, example 2, and comparative example 1 is fully opened. In addition, an opening area A0 in Fig. 8 represents the area of the intake opening formed by the valve seat.

Although the inclination greatly changed before and after the separation distance L1 in example 1 and example 2 as illustrated in Fig. 8, the inclination was constant in comparative example 1. The inclination in example 1 and example 2 after the separation distance L1 was substantially the same as the inclination in comparative example 1.

In addition, a region S enclosed by a dashed line in Fig. 8 is a region in which the valve body in comparative example 1 lodged at a midpoint of the opening in the open and close operation checking test. In this region S, the opening area in comparative example 1 is smaller than the area A0 of the intake opening formed by the valve seat. Accordingly, when the valve body lodges at a midpoint of the opening as in the open and close operation checking test in comparative example 1, a sufficient opening area cannot be obtained, the passage resistance is increased, and the performance of the compressor is assumed to be reduced. In contrast, the opening area for the separation distance L2 when the check valve is fully opened in example 1 and example 2 is smaller than that in comparative example 1, but the opening area is larger than the area A0 of the intake opening formed by the valve seat. In the check valve illustrated in Figs. 2 to 5, since the valve body does not lodge in the opening as in the open and close operation checking test in example 1 and example 2, the check valve could be fully opened, a sufficient opening area could be obtained, and the passage resistance was not increased.

### Reference Signs List

1: vane compressor
2: cam ring
3: rotary shaft
4: rotor
5: vane groove
6: vane
7: rear head
8: front head
9: space
10: housing
12: intake port
13: low pressure chamber
14: discharge port
15: high pressure chamber
16: compression space
17: compression chamber
18: shaft seal
19: shaft seal chamber
50: check valve
51: valve seat
51a: intake opening
52: valve body
52F: outer peripheral surface shape of valve body
53: biasing member
54: guiding portion
54a: hole
55: opening
55a: first opening
55b: second opening
56: refrigerant circulation groove
57: vertical groove
58: supporting portion
59: third opening
59a: end portion of third opening
150: check valve
152: valve body
153: biasing means
154: guiding portion
155: opening
158: supporting portion
521: closed portion
521a: projecting portion
521b: abutting portion
522: circumferential surface portion
900: graph
901: step

## Claims

1. A vane compressor (1) comprising:
a housing (10) having an intake port (12) sucking a refrigerant gas from an external refrigeration cycle and a low pressure chamber (13) communicating with the intake port (12) ; and
a check valve (50) for preventing backflow of the refrigerant gas from the low pressure chamber (13) to the external refrigeration cycle,
wherein the check valve (50) includes
a valve seat (51) provided in the intake port (12) and having an intake opening (51a) at the center thereof,
a cylindrical valve body (52) having an abutting portion (521b) abutting against the valve seat (51),
a biasing member (53) biasing the valve body (52) in a direction in which the valve body (50) abuts against the valve seat (51), and
a guiding portion (54) formed integrally with the housing and slidably housing the valve body (52),
wherein the guiding portion (54) has an opening (55) through which part of a peripheral wall is opened to the low pressure chamber (13),
wherein an opening area of the opening (55) changes when a circumferential surface portion (522) of the valve body (52) slides along an inner wall of the guiding portion (54), and
**characterized in that** a ratio of a change in the opening area of the opening (55) to a change in a separation distance (L) between the valve seat (51) and the valve body (52) changes stepwise from a small value to a large value as the separation distance (L) increases.

2. The vane compressor (1) according to claim 1,
wherein, when the ratio of the change in the opening area to the change in the separation distance (L) is small, the maximum value of the opening area is smaller than an area of the intake opening (51a) formed by the valve seat (51).

3. The vane compressor (1) according to claim 1 or 2,
wherein the opening (55) includes a first opening (55a) and a second opening (55b), the first opening (55a) being closer to the intake port (12) than the second opening (55b), the second opening (55b) being connected to the first opening (55a) and having a larger opening distance in a circumferential direction of the valve body (52) than the first opening (55a) .

4. The vane compressor (1) according to claim 3,
wherein the guiding portion (54) has a supporting portion (58) for supporting the circumferential surface portion (522) of the valve body (52) so as to suppress an inclination of the valve body (52), and
wherein the supporting portion (58) supports a half or more of a height of the circumferential surface portion (522) of the valve body (52) when the abutting portion (521b) of the valve body (52) is present in the second opening (55b).

5. The vane compressor (1) according to any one of claims 1 to 4,
wherein, when the abutting portion (521b) of the valve body (52) is present in a position corresponding to the separation distance (L) in which the ratio of the change in the opening area to the change in the separation distance (L) is small, an angle formed by connecting one end of the opening (55), the central axis of the valve body (52), and the other end of the opening (55) in a cross section that is orthogonal to the central axis of the valve body (52) and in contact with the abutting portion (521b) is less than 120 degrees.

6. The vane compressor (1) according to any one of claims 1 to 5,
wherein the opening (55) is opened in a direction parallel to a rotary shaft (3) of a rotor.

7. The vane compressor (1) according to any one of claims 1 to 6,
wherein the valve body (52) is formed so that a border between the circumferential surface portion (522) and the abutting portion (521b) has a round shape.

8. The vane compressor (1) according to any one of claims 1 to 7,
wherein the guiding portion (54) has, in an end portion opposite to the intake port (12), an annular refrigerant circulation groove (56) having a diameter larger than a diameter of an inner circumferential surface of the peripheral wall of the guiding portion (54).

9. The vane compressor (1) according to claim 3,
wherein a third opening (59) connected to the second opening (55b) is provided in the supporting portion (54).

10. The vane compressor (1) according to claim 9,
wherein an end portion of the third opening (59) opposite to the second opening (55b) is inclined with respect to a direction orthogonal to the central axis (O) of the valve body (52) .

## Patentansprüche

1. Flügelzellenverdichter (1), umfassend:
ein Gehäuse (10) mit einem Ansaugkanal (12), der ein Kältemittelgas aus einem externen Kältekreislauf ansaugt, und eine Niederdruckkammer (13), die mit dem Ansaugkanal (12) kommuniziert; und
ein Rückschlagventil (50) zum Verhindern des Rückflusses des Kältemittelgases aus der Niederdruckkammer (13) in den externen Kältekreislauf,
wobei das Rückschlagventil (50) enthält:
einen Ventilsitz (51), der in dem Ansaugkanal (12) vorgesehen ist und eine Ansaugöffnung (51a) in der Mitte desselben aufweist,
einen zylindrischen Ventilkörper (52), der einen an dem Ventilsitz (51) anliegenden Anlageabschnitt (521b) aufweist,
ein Vorspannelement (53), das den Ventilkörper (52) in eine Richtung vorspannt, in der der Ventilkörper (50) an dem Ventilsitz (51) anliegt, und
einen Führungsabschnitt (54), der einstückig mit dem Gehäuse ausgebildet ist und den Ventilkörper (52) verschiebbar aufnimmt,
wobei der Führungsabschnitt (54) eine Öffnung (55) aufweist, durch die ein Teil einer Umfangswand zur Niederdruckkammer (13) geöffnet ist,
wobei sich eine Öffnungsfläche der Öffnung (55) ändert, wenn ein Umfangsflächenabschnitt (522) des Ventilkörpers (52) entlang einer Innenwand des Führungsabschnitts (54) gleitet, und
**dadurch gekennzeichnet, dass** ein Verhältnis einer Änderung der Öffnungsfläche der Öffnung (55) zu einer Änderung eines Abstands (L) zwischen dem Ventilsitz (51) und dem Ventilkörper (52) sich schrittweise von einem kleinen Wert zu einem großen Wert ändert, wenn der Abstand (L) zunimmt.

2. Flügelzellenverdichter (1) gemäß Anspruch 1,
wobei, wenn das Verhältnis der Änderung der Öffnungsfläche zur Änderung des Abstands (L) klein ist, der Maximalwert der Öffnungsfläche kleiner als eine Fläche der Ansaugöffnung (51a) ist, die durch den Ventilsitz (51) gebildet wird.

3. Flügelzellenverdichter (1) gemäß Anspruch 1 oder 2,
wobei die Öffnung (55) eine erste Öffnung (55a) und eine zweite Öffnung (55b) enthält, wobei die erste Öffnung (55a) näher am Ansaugkanal (12) als die zweite Öffnung (55b) liegt, wobei die zweite Öffnung (55b) mit der ersten Öffnung (55a) verbunden ist und eine größere Öffnungsentfernung in einer Umfangsrichtung des Ventilkörpers (52) als die erste Öffnung (55a) aufweist.

4. Flügelzellenverdichter (1) gemäß Anspruch 3,
wobei der Führungsabschnitt (54) einen Stützabschnitt (58) zum Stützen des Umfangsflächenabschnitts (522) des Ventilkörpers (52) aufweist, um eine Neigung des Ventilkörpers (52) zu unterdrücken, und
wobei der Stützabschnitt (58) eine Hälfte oder mehr einer Höhe des Umfangsflächenabschnitts (522) des Ventilkörpers (52) stützt, wenn der Anlageabschnitt (521b) des Ventilkörpers (52) in der zweiten Öffnung (55b) vorhanden ist.

5. Flügelzellenverdichter (1) gemäß einem der Ansprüche 1 bis 4,
wobei, wenn der Anlageabschnitt (521b) des Ventilkörpers (52) in einer Position entsprechend des Abstands (L) vorhanden ist, in dem das Verhältnis der Änderung der Öffnungsfläche zur Änderung des Abstands (L) klein ist, ein Winkel, der durch Verbinden eines Endes der Öffnung (55), der Mittelachse des Ventilkörpers (52) und des anderen Endes der Öffnung (55) in einem Querschnitt gebildet wird, der rechtwinklig zur Mittelachse des Ventilkörpers (52) und in Kontakt mit dem Anlageabschnitt (521b) ist, weniger als 120 Grad beträgt.

6. Flügelzellenverdichter (1) gemäß einem der Ansprüche 1 bis 5,
wobei die Öffnung (55) in einer Richtung parallel zu einer Drehwelle (3) eines Rotors geöffnet ist.

7. Flügelzellenverdichter (1) gemäß einem der Ansprüche 1 bis 6,
wobei der Ventilkörper (52) so ausgebildet ist, dass eine Grenze zwischen dem Umfangsflächenabschnitt (522) und dem Anlageabschnitt (521b) eine runde Form aufweist.

8. Flügelzellenverdichter (1) gemäß einem der Ansprüche 1 bis 7,
wobei der Führungsabschnitt (54) in einem Endabschnitt gegenüber dem Ansaugkanal (12) eine ringförmige Kältemittelzirkulationsrinne (56) mit einem Durchmesser aufweist, der größer als ein Durchmesser einer inneren Umfangsfläche der Umfangswand des Führungsabschnitts (54) ist.

9. Flügelzellenverdichter (1) gemäß Anspruch 3,
wobei eine dritte Öffnung (59), die mit der zweiten Öffnung (55b) verbunden ist, in dem Stützabschnitt (54) vorgesehen ist.

10. Flügelzellenverdichter (1) gemäß Anspruch 9,
wobei ein Endabschnitt der dritten Öffnung (59) gegenüber der zweiten Öffnung (55b) in Bezug auf eine Richtung rechtwinklig zur Mittelachse (O) des Ventilkörpers (52) geneigt ist.

## Revendications

1. Compresseur à palettes (1) comprenant :
un boîtier (10) ayant un orifice d'admission (12) aspirant un gaz réfrigérant provenant d'un cycle de réfrigération externe et une chambre basse pression (13) communiquant avec l'orifice d'admission (12) ; et
un clapet anti-retour (50) pour empêcher le retour du gaz réfrigérant de la chambre basse pression (13) vers le cycle de réfrigération externe,
le clapet anti-retour (50) comprenant
un siège de soupape (51) situé dans l'orifice d'admission (12) et ayant une ouverture d'admission (51a) en son centre,
un corps de soupape cylindrique (52) ayant une partie de butée (521b) venant en butée contre le siège de soupape (51),
un élément de sollicitation (53) sollicitant le corps de soupape (52) dans une direction dans laquelle le corps de soupape (50) vient en butée contre le siège de soupape (51), et
une partie de guidage (54) formée d'un seul tenant avec le boîtier et abritant de manière coulissante le corps de soupape (52),
la partie de guidage (54) ayant une ouverture (55) par laquelle une partie d'une paroi périphérique est ouverte sur la chambre basse pression (13),
une zone d'ouverture de l'ouverture (55) changeant lorsqu'une partie de surface circonférentielle (522) du corps de soupape (52) coulisse le long d'une paroi intérieure de la partie de guidage (54), et
**caractérisé en ce qu'**un rapport d'un changement dans la zone d'ouverture de l'ouverture (55) sur un changement dans une distance de séparation (L) entre le siège de soupape (51) et le corps de soupape (52) change par étapes d'une petite valeur à une grande valeur lorsque la distance de séparation (L) augmente.

2. Compresseur à palettes (1) selon la revendication 1,
lorsque le rapport du changement dans la zone d'ouverture sur le changement dans la distance de séparation (L) est faible, la valeur maximale de la zone d'ouverture étant inférieure à une zone de l'ouverture d'admission (51a) formée par le siège de soupape (51).

3. Compresseur à palettes (1) selon la revendication 1 ou 2,
l'ouverture (55) comprenant une première ouverture (55a) et une deuxième ouverture (55b), la première ouverture (55a) étant plus proche de l'orifice d'admission (12) que la deuxième ouverture (55b), la deuxième ouverture (55b) étant reliée à la première ouverture (55a) et ayant une distance d'ouverture plus grande dans une direction circonférentielle du corps de soupape (52) que la première ouverture (55a).

4. Compresseur à palettes (1) selon la revendication 3,
la partie de guidage (54) ayant une partie de support (58) pour supporter la partie de surface circonférentielle (522) du corps de soupape (52) de sorte à supprimer une inclinaison du corps de soupape (52), et
la partie de support (58) supportant une moitié ou plus d'une hauteur de la partie de surface circonférentielle (522) du corps de soupape (52) lorsque la partie de butée (521b) du corps de soupape (52) est présente dans la deuxième ouverture (55b).

5. Compresseur à palettes (1) selon l'une quelconque des revendications 1 à 4,
lorsque la partie de butée (521b) du corps de soupape (52) est présente dans une position correspondant à la distance de séparation (L) dans laquelle le rapport du changement dans la zone d'ouverture sur le changement dans la distance de séparation (L) est faible, un angle formé en reliant une extrémité de l'ouverture (55), l'axe central du corps de soupape (52), et l'autre extrémité de l'ouverture (55) dans une section transversale qui est orthogonale à l'axe central du corps de soupape (52) et en contact avec la partie de butée (521b) étant inférieur à 120 degrés.

6. Compresseur à palettes (1) selon l'une quelconque des revendications 1 à 5,
l'ouverture (55) étant ouverte dans une direction parallèle à un arbre rotatif (3) d'un rotor.

7. Compresseur à palettes (1) selon l'une quelconque des revendications 1 à 6,
le corps de soupape (52) étant formé de sorte qu'une frontière entre la partie de surface circonférentielle (522) et la partie de butée (521b) ait une forme ronde.

8. Compresseur à palettes (1) selon l'une quelconque des revendications 1 à 7,
la partie de guidage (54) ayant, dans une partie d'extrémité opposée à l'orifice d'admission (12), une rainure annulaire de circulation de réfrigérant (56) ayant un diamètre supérieur au diamètre d'une surface circonférentielle intérieure de la paroi périphérique de la partie de guidage (54).

9. Compresseur à palettes (1) selon la revendication 3,
une troisième ouverture (59) reliée à la deuxième ouverture (55b) étant fournie dans la partie de support (54) .

10. Compresseur à palettes (1) selon la revendication 9,
une partie d'extrémité de la troisième ouverture (59) opposée à la deuxième ouverture (55b) étant inclinée par rapport à une direction orthogonale à l'axe central (O) du corps de soupape (52).
